# EUROPEAN PATENT APPLICATION

(11) **EP 2 535 781 A1**
(43) Date of publication of application: **19.12.2012**
(21) Application number: 11170280.9
(22) Date of filing: 17.06.2011
(51) Int. Cl.: G05B 19/418, G05B 23/02

(54) **Collecting data in an industrial plant**

(71) Applicant: ABB Research Ltd., 8050 Zürich (CH)
(72) Inventor: Naedele, Martin, 8050 Zürich (CH)
(74) Representative: ABB Patent Attorneys

(57) **Abstract**

For collecting data from an industrial plant, a mobile device 16, 16' is guided to a device display of the industrial plant 30, an image of the device display 34a is recorded with a camera 20 of the mobile device 16, 16', the image is transmitted to a central data collecting device 12; and device related data is extracted from the image.

## Description

### FIELD OF THE INVENTION

The invention relates to the field of data collection in industrial plants. In particular, the invention relates to a method and a system for collecting data from an industrial plant.

### BACKGROUND OF THE INVENTION

Industrial plants usually comprise a plurality of devices to be monitored and inspected. Although it is possible that some of the devices may communicate with a central system and may be monitored via the central system online, there are still may be devices that do not have such communication capabilities ant that have to be monitored in other ways.

One possibility in industrial plant operations are the so called "operator rounds", in which a person (a human operator) regularly walks around the industrial plant and takes readings from certain gauges and writes them down (and possibly takes action, if the reading is not OK).

Many companies have solutions to manage the "write down" records in electronic form. For example, mobile devices may be used that allow alphanumerical data entry.

As another example, WO 2008/037094 A1 proposes to read optical bar code information by an acquisition module which is part of a mobile station or a mobile phone and that is carried by an inspecting on-site user. The gathered information is transmitted via a standard wireless data radio transmission module of the acquisition module to a remote service technician. The inspected product (for example a primary or secondary device of an electrical equipment) to which the product information relates may be permanently (no communication interface provided at all) or temporarily (due to a disturbance on a standard wire-based communication link) be disconnected from the service technician or his receiving data center, respectively.

### DESCRIPTION OF THE INVENTION

It is an object of the invention to simplify the collection of data in an industrial plant. Another object of the invention is to provide alternative solutions of collecting data during operator rounds. This objective is achieved by the subject-matter of the independent claims. Further exemplary embodiments are evident from the dependent claims and the following description.

A first aspect of the invention relates to a method for collecting data from an industrial plant. An industrial plant may be a building, a room or a site at which a number of machines or devices are located that have to be monitored. For example, an industrial plant may be an electrical substation, a power plant, a refinery, a chemical plant, a utility site etc. Data may be al form of information that may be stored in a digital way, for example images, sounds, values, character strings, etc.

According to an embodiment of the invention, the method comprises the steps of: guiding a mobile device to a device display of the industrial plant; recording an image of the device display with a camera of the mobile device; extracting a device related data from the image. The mobile device may be a device specifically designed for this purpose. It is further possible that the mobile device is a standard device like a cell phone or a portable computer. With the camera an image or picture of an analog or digital display of an arbitrary device of the industrial plant may be taken. For example such a display may be a screen, a LCD, a cathode ray tube or a gauge. For example, the image may be a digital image from which with optical character recognition characters of the display may be extracted. These characters may comprise the device related data. In general, device related data may comprise values that are related to the device of the industrial plant that is connected to the device display and that display these values on its display.

In such a way, the work of a human operator may be simplified, since he does not have to type the data shown on the display into the mobile device, but may simply take an image of the display and the data is then extracted from the image.

According to an embodiment of the invention, the device display is a sensor display and the device related data is a sensor value. For example, the image is taken from a display showing a measurement value of the sensor and the measurement value is extracted from the image. In this case it may be possible that the sensor display is an analog gauge.

According to an embodiment of the invention, the method comprises the step of: transmitting the image to a central data collecting device. The mobile device may comprise a transceiver that is adapted to transmit the image to the central data collecting device, which may be a central plant system or a SCADA system. In such a way, the image and/or its accompanying data may be stored in a database of the central data collecting system.

According to an embodiment of the invention, the device related data is extracted in the mobile device and the device related data is transmitted to the central data collecting device. Here, also the device related data may be displayed on a display of the mobile device. A human operator of the mobile device may check, whether the extracted device related data corresponds to the value displayed on the device display, for example the measurement value.

Additionally or alternatively, the device related data is extracted in the central data collecting device. When the device related data is extracted in the data collecting device, on the other hand, the software of the mobile device need not be modified. On the other hand the data extracted in the mobile device may be compared with the data extracted in the central data collecting device. In the latter case, the data collecting device may check, if the mobile device has extracted the correct data values.

According to an embodiment of the invention, the method comprises further the step of: time stamping the image with the time at which the image has been recorded. It has to be understood that further data may be stored together with the image, like the actual position and/or attitude of the mobile device, when the image has been taken or further data inputted by a human operator of the mobile device.

According to an embodiment of the invention, the method comprises further the steps of: guiding the mobile device to a part of the industrial plant; recording a second image of the part of the industrial plant with a camera of the mobile device; extracting plant related data from the image. Additionally, the second image may be transmitted to the central data collecting device. Not only data extracted from device displays may be extracted from an image. It is also possible that other plant related information, for example the surface of a tank or a wall is imaged and then, for example, rust stain on the tank or condensed water may be examined in the image. As a second example, it may be possible to look at and photograph the physical machinery and extract, for example, the distance between two metal parts to judge on wear and necessary replacement.

According to an embodiment of the invention, the second image is compared with a previous image to extract plant related data. For example, a series of images taken at different time point may be analyzed to extract plant related data. In such a way, a color change of a part of machinery or a distance change between two parts of machinery may be observed and monitored.

It has to be understood that also the plant related data may be extracted in the mobile device and then transmitted to the central data collecting device. Additionally or alternatively, the plant related data may be extracted in the data collecting device.

According to an embodiment of the invention, the part of the industrial plant is a name plate and the plant related data is a identifier on the name plate. For example, the name plate may be an identifier for a sensor or a device to which the device display belongs. It is also possible that the part of the industrial plant is a bar code and the plant related data is the value of the bar code.

According to an embodiment of the invention, the second image is recorded in a specific perspective at the part of the industrial plant. For example, the mobile device may instruct the human operator to direct the camera at a specific place into a specific direction, so that the second images recorded at different time points may be compared with each other.

According to an embodiment of the invention, the guiding of the mobile device is supported by position and/or attitude and/or direction information. For example, the mobile device may comprise a GPS receiver and the human operator is informed, when he reaches a location at which an image has to be taken.

According to an embodiment of the invention, the method comprises the step: displaying guiding information on the mobile device, which guides a human operator carrying the mobile device to the part of the industrial plant. For example, the mobile device may have a display on its own on which a map or an arrow pointing in the correct direction is display. The guiding information may also be presented as text or may be the previous picture of the same target, shown as overlay (or edges only). It may be possible that the guiding information has been stored in the mobile device, before a human operator has started its round. However, the guiding information may be received online during the round.

According to an embodiment of the invention, the mobile device is a robot. The mobile device may be adapted to move on its own. In such a case, the round or tour of the mobile device also may be supported by guiding information.

A further aspect of the invention relates to a computer program for collecting data from an industrial plant, which, when being executed by at least one processor, is adapted to carry the steps of the method as described in the above and in the following. For example such a computer program may be executed on processors of the mobile device and/or the central data collecting system.

A further aspect of the invention relates to a computer-readable medium, in which such a computer program is stored.

A further aspect of the invention relates to a system for collecting data from an industrial plan, which comprises a mobile device and a central data collecting device.

According to an embodiment of the invention, the system is adapted to carry out the method as described in the above and in the following.

According to an embodiment of the invention, the system is adapted to guide the mobile device to a device display of the industrial plant; the mobile device comprises an camera adapted to record an image of the device display; the mobile device comprises an transceiver adapted to transmit the image to the central data collecting device; and the system is adapted to extract device related data from the image.

It has to be understood that features of the method as described in the above and in the following may be features of the system as described in the above and in the following and vice versa.

A further aspect of the invention relates to a usage of a mobile device with a camera for taking an image of a device display in an industrial plant and extracting device related data from the image.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig.1 schematically shows a system according to an embodiment of the invention.
Fig.2 schematically shows an industrial plant for which the system of Fig. 1 may be used.

In principle, identical or similar parts are provided with the same reference symbols in the figures.

### DETAILED DESCRIPTION OF EXEMPLARY EMBODIMENTS

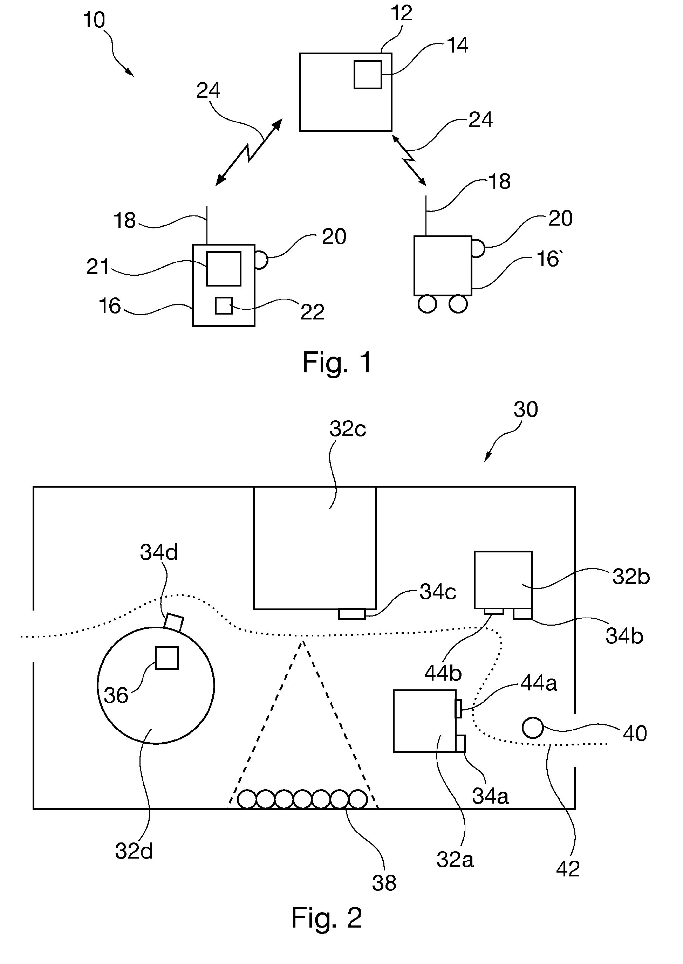

Fig.1 schematically shows a system 10 for collecting data from an industrial plant. The system 10 comprises a mobile device 16, 16' and a central data collecting device 12, which may be a central computer system or a SCADA system of an industrial plant.

The mobile device 16 is a hand held device 16 which is adapted to be carried by a human operator. The mobile device 16 comprises a camera 20, a display 21, an input device 22 (in the simplest case a button 22) and a transceiver 18. The camera 20 is adapted to record an image, when the user actuates the device 16 with the input device 22. The display 21 of the mobile device is adapted to show the recorded image and further information, for example an extracted value, the current position of the mobile device 16, or information guiding the user to the next location at which an image should be recorded.

The mobile device 16 comprises a transceiver that is adapted to transmit data (for example the image and the extracted value) over a communication channel 24 to the central data collecting device 12. The communication channel 24 may comprise a data communication network, for example a network for cell phones or for blue tooth transceivers.

Furthermore, the mobile device 16 may comprise a position sensor, for example a GPS receiver.

The mobile device 16' is a robot that is adapted to move through an industrial plant on its own. The robot 16' may comprise a camera 20, a transceiver 18 and a position sensor.

The central data collecting device 12 may comprise a database 14, in which images recorded by the mobile device 16, 16' are stored. The central data collecting device 12 and the mobile device 16, 16' may be adapted to extract data from an image that relates to a device display that has been recorded by the camera 20 or that, in general, relates to plant specific data that may be included in the image.

Fig. 2 schematically shows an industrial plant 30, in which the mobile device 16, 16'may be employed.

The industrial plant comprises a number of plant devices 32a, 32b, 32c, 32d. For example, the device 32d may be a tank with a level sensor. Each of the devices 32a, 32b, 32c, 32d has a device display 34a, 34b, 34c, 34d. For example, the device display 34b may show the times at which the device 32b has started and stopped its latest operation. The device display 34d may show the current level of material in the tank 32d.

Furthermore, a temperature sensor 36 is positioned on top of the tank 32d. The temperature sensor 36 is able to submit a measurement value via a blue tooth transceiver.

A number of pipes 38 is positioned at a wall of the industrial plant 30. The pipes 38 have to be examined regularly, whether they are exposed to corrosion.

For examining and monitoring the industrial plant 30, a human operator 40 carrying the mobile device 16 enters the industrial plant 30 and follows the path 42 or operator round 42 through the industrial plant 30 and executes the tasks explained in the following. The path 42 and/or the tasks may be predefined, i.e. the human operator 40 may have been instructed to follow the path 42 and/or may have been instructed to execute the tasks. Alternatively, the mobile device 16 may display information that guides the human operator 40 through the industrial plant 30 along the path 42 and/or informs the human operator 40 to execute a task at a specific position within the industrial plant 30.

It has to be understood that the tasks described in the following also may be executed by a robot 16', that either has been pre-programmed to follow the path 42 and/or to execute the tasks. Alternatively or additionally, the robot 16' receives the respective instructions over the communication channel 24. However, the tasks described in the following will be explained with respect to a human operator 40.

In a first task, the human operator is guided to the device 32a and instructed to take an image of the device display 34a and a name plate 44a attached to the device 32a. For example, the device display 34a is a gauge with an indicator. The mobile device 16 extracts the measurement value displayed by the gauge from the recorded image, extracts the identifier from the name plate 44a, and displays the extracted value on its display 21, so that the human operator 40 can verify, whether the extraction was correct. Thus, the camera 21 on the mobile device 16 is used to read the gauge 34a and to convert the gauge value from the image to a value, to remove the data entry operation the human operator 40 would have to carry out otherwise. On other words, a digital interpretation of the image may replace the entering of the value read by the human operator 40.

In the end, the image, the extracted measurement value and the name plate identifier are provided with a time stamp and are transmitted to the central data collection device 12, which stores the received data in the database 14. In addition to the extracted/converted value, also the time-stamped, possibly digitally signed image may be stored as proof that the operator round 42 has been made (security or compliance scenario) and the value was correctly read.

It may be very important to capture asset information (like the name plate), besides measurements. In motors and generators service, this often means nameplate data recording. Automating the data capture process could save considerable time and effort at site, in addition to benefits of trending information by time stamping.

In a second task, the human operator 40 is guided to the device 32b and instructed to record images of the device display 34b and an bar code 44b attached to the device 32b. The mobile device 16 extracts the time values shown on the device display 34b and the bar code value of the bar code 44b from the recorded images. The bar code 44b may be used to determine the position in the industrial plant and/or to identify the device 32b and/or for identifying tags for a tag out.

After that, the same steps as in the first task may be performed: displaying the values on the display 21, verification by human operator, time stamping and transmission to the central data collection device 12.

In a third task, the human operator 40 is guided to the device 32c and instructed to record an image of the device display 34c. Here, the position information of the GPS receiver is added to the image and the position information and the image are transmitted to the central data collection device 12. The central data collection device uses the position information to identify the device 32c and extracts the values shown on the device display 34c on its own.

In a fourth task, the human operator 40 is guided in front of the pipes 38 and is instructed to direct the camera 20 into a specific direction towards the pipes 38. After that, the human operator records an image of the pipes 38. The image is transmitted to the central data collection device 12, which compares the image with previously recorded images. In the case that there are differences in the images, this may indicate, that colour has flaked of the pipes 30 and that the pipes are corroding.

This inspection point of the operator round 42 may be seen as an "image only" inspection point, where the human operator makes an image of a plant part 38 from a specified perspective at every operator round 42. The mobile device 16 may additionally help to find the correct perspective using position and attitude information. An asset management software in the central data collection device 12 may use image analysis to analyze all submitted images to discover anomalies (e.g. missing/added pieces) or trends (e.g. physical degradation) over time and alerts accordingly.

In this task, instead of the image also a sound may be recorded. For example, the sound may be recorded in the vicinity of a running motor and a software may analyze the recorded sound data to determine, whether the motor is running correctly.

In a fifth task, the operator is guided to the device 32d and instructed to record an image of the device display 34d. Subsequently, the extraction and transmission steps of one of the previous tasks may be executed. Additionally, the mobile device 16 starts a data communication with the sensor 36 and processes the received data together with the recorded image. The mobile device 16 may be adapted to use blue tooth to receive readings from inaccessible areas of the industrial plant 30.

Summarized, the method may extend current mobile device technology for operator rounds, for example allowing either the use of features (specifically a camera) of current smart phones. The method may allow designing much simpler mobile devices for operator rounds, which may consists only of a camera, communication equipment, and a button. These devices may be cheaper and may be operated with gloves. Furthermore, less training for human operator is need.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A method for collecting data from an industrial plant (30), the method comprising:
guiding a mobile device (16, 16') to a device display (34a) of the industrial plant (30);
recording an image of the device display (34a) with a camera (20) of the mobile device (16, 16');
transmitting the image to a central data collecting device (12);
extracting device related data from the image.

2. The method of claim 1,
wherein the device display is a sensor display (34a) and the device related data is a sensor value.

3. The method of claim 1 or 2,
wherein the device related data is extracted in the mobile device (16) and the device related data is transmitted to the central data collecting device (12); and/or
wherein the device related data is extracted in the data collecting device (12).

4. The method of one of the preceding claims, further comprising:
time stamping the image with the time at which the image has been recorded.

5. The method of one of the preceding claims, further comprising:
guiding the mobile device (16, 16') to a part (38) of the industrial plant (30);
recording a second image of the part (38) of the industrial plant (30) with a camera (20) of the mobile device (16, 16');
transmitting the second image to the central data collecting device (12);
extracting plant related data from the second image.

6. The method of claim 5,
wherein the second image is compared with a previous image to extract plant related data.

7. The method of claim 5 or 6,
wherein the part of the industrial plant (30) is a name plate (34a) and the plant related data is a identifier on the name plate; and/or
wherein the part of the industrial plant (30) is a bar code (44b) and the plant related data is the value of the bar code.

8. The method of one of claims 5 to 7,
wherein the second image is recorded in a specific perspective at the part (38) of the industrial plant (30).

9. The method of one of the preceding claims,
wherein the guiding is supported by position and/or attitude information.

10. The method of one of the preceding claims, further comprising the step:
displaying guiding information on the mobile device (16), which guides an human operator (40).

11. The method of one of the preceding claims,
wherein the mobile device is a robot (16').

12. A system (10) for collecting data from an industrial plant (30), the system (10) comprising:
a mobile device (16, 16');
a central data collecting device (12);
wherein the system (10) is adapted to guide the mobile device (16, 16') to a device display (34a) of the industrial plant (30);
wherein the mobile device (16, 16') comprises an camera (20) adapted to record an image of the device display (34a);
wherein the mobile device (16, 16') comprises an transceiver (18) adapted to transmit the image to the central data collecting device (12);
wherein the system (10) is adapted to extract device related data from the image.
